(19) Europäisches Patentamt / European Patent Office / Office européen des brevets

(11) **EP 4 496 356 A1**

(12) **EUROPEAN PATENT APPLICATION**
published in accordance with Art. 153(4) EPC

(43) Date of publication:
**22.01.2025 Bulletin 2025/04**

(21) Application number: **23802422.8**

(22) Date of filing: **10.01.2023**

(51) International Patent Classification (IPC):
**H04W 4/029** (2018.01)

(52) Cooperative Patent Classification (CPC):
**H04W 4/029; H04W 4/33; H04W 88/08**

(86) International application number:
**PCT/CN2023/071746**

(87) International publication number:
**WO 2023/216645 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.05.2022 CN 202210499801**

(71) Applicant: **ZTE Corporation
Shenzhen, Guangdong 518057 (CN)**

(72) Inventors:
• **LI, Junqiang
  Shenzhen, Guangdong 518057 (CN)**
• **CHEN, Shijun
  Shenzhen, Guangdong 518057 (CN)**
• **CHEN, Dawei
  Shenzhen, Guangdong 518057 (CN)**

(74) Representative: **Deambrogi, Edgardo et al
Jacobacci & Partners S.p.A.
Corso Emilia 8
10152 Torino (IT)**

(54) **INDOOR BASE STATION LOCATION CALIBRATION METHOD AND DEVICE, STORAGE MEDIUM, AND ELECTRONIC DEVICE**

(57) Provided are an indoor base station location calibration method and device, a storage medium, and an electronic device. The method includes: determining a space for calibration according to an indoor map; determining a reference point of a base station to be calibrated in the space for calibration; determining a relative distance between the base station to be calibrated and the reference point; and performing location calibration on the base station to be calibrated according to the relative distance. The problems in the related art that base station coordinate calibration depends on professionals and professional devices, surveying and mapping efficiency is low, and surveying and mapping are complex may be solved. Location calibration can be efficiently and flexibly performed on a base station, so as to reduce the dependence on professionals and professional devices, and improve the efficiency of base station coordinate calibration. By effectively and flexibly changing the base stations to meet requirements, positioning efficiency is improved.

```
determine a space for calibration according to an indoor map          S202
                              ↓
determine a reference point of a base station to be calibrated in
the space for calibration                                             S204
                              ↓
determine a relative distance between the base station to be
calibrated and the reference point                                    S206
                              ↓
perform location calibration on the base station to be calibrated
according to the relative distance                                    S208
```

Fig.2

## Description

## Cross-Reference to Related Application

The present disclosure is based upon and claims priority to Chinese Patent Application No. CN202210499801.1 filed on May 9, 2022 and entitled "Indoor Base Station Location Calibration Method and Device, Storage Medium, and Electronic Device", the disclosure of which is hereby incorporated by reference in its entirety.

## Technical Field

Embodiments of the present disclosure relate to the field of communications, and specifically to an indoor base station location calibration method and apparatus, a storage medium and an electronic apparatus.

## Background

As the deployment of 5G networks accelerates, the utilization of 5G is rapidly increasing, and supported by powerful network capabilities, industry demands for utilizing 5G networks to simultaneously solve two key problems of communication as well as positioning are becoming more and more urgent.

The accurate location calibration of a base station determines the accuracy of an entire positioning system. In particular, in an indoor environment, accurate base station calibration determines the degree of the accuracy of the entire positioning system. If base station location calibration is more accurate, positioning accuracy errors due to measurement errors can be reduced; and low efficiency and low accuracy base station location calibration leads to problems of poor measurement accuracy, low measurement efficiency, and the like, thus severely affecting a positioning effect and later maintenance and operation of the positioning system. With the emerging of high accuracy measurement means such as a laser range finder, an ultrasonic range finder, etc., a relative location of the base station can be accurately measured, and without the need of specialized technicians, non-specialists may also accurately measure a relative location to be measured by means of sophisticated instruments. Coordinates of a traditional base station cannot be easily changed after being surveyed and mapped. However, due to service requirements and different demands, the number of base stations often needs to be flexibly increased or decreased, or changing the coordinates of the base station frequently requires specialized surveyors to perform professional surveys and maintain updated maps, resulting in waste in a lot of manpower and material resources, time consumption, and reduced efficiency. If there are many obstructions around the base station, or there are a plurality of coordinates of base stations to be calibrated, and terrains are complicated as well as time-consuming and easy to make mistakes, etc., measurement difficulty and measurement accuracy are greatly increased, thus reducing working efficiency.

No solution has been proposed to the problems in the related art that base station coordinate calibration depends on professionals and professional devices, surveying and mapping efficiency is low, and surveying and mapping are complex.

## Summary

Embodiments of the present disclosure provide an indoor base station location calibration method and apparatus, a storage medium and an electronic apparatus, to at least solve the problems in the related art that base station coordinate calibration depends on professionals and professional devices, surveying and mapping efficiency is low, and surveying and mapping are complex.

One embodiment of the present disclosure provides an indoor base station location calibration method. The method includes the following operations.

A space for calibration is determined according to an indoor map.

A reference point of a base station to be calibrated in the space for calibration is determined.

A relative distance between the base station to be calibrated and the reference point is determined.

Location calibration is performed on the base station to be calibrated according to the relative distance.

Another embodiment of the present disclosure further provides an indoor base station location calibration apparatus. The apparatus includes a first determination module, a second determination module, a third determination module, and a calibration module.

The first determination module is configured to determine a space for calibration according to an indoor map.

The second determination module is configured to determine a reference point of a base station to be calibrated in the space for calibration.

The third determination module is configured to determine a relative distance between the base station to be calibrated and the reference point.

The calibration module is configured to perform location calibration on the base station to be calibrated according to the relative distance.

Still another embodiment of the present disclosure further provides a computer-readable storage medium. The storage medium stores a computer program. Steps in any one of the above method embodiments are executed when the computer program is configured to operate.

Still another embodiment of the present disclosure further provides an electronic apparatus. The electronic apparatus includes a memory and a processor. The memory stores a computer program. The processor is configured to operate the computer program to execute steps in any one of the above method embodiments.

## Brief Description of the Drawings

Fig. 1 is a block diagram of a hardware structure of a mobile terminal of an indoor base station location calibration method according to embodiments of the present disclosure.

Fig. 2 is a flowchart of an indoor base station location calibration method according to embodiments of the present disclosure.

Fig. 3 is a schematic diagram of a location relationship between an object to be calibrated in a three-dimensional space and a reference point plane according to embodiments of the present disclosure.

Fig. 4 is a schematic diagram of a location relationship between an object to be calibrated on a wall space of a two-dimensional space and a reference point plane according to embodiments of the present disclosure.

Fig. 5 is a schematic diagram of a location relationship between an object to be calibrated in a special space and a reference point plane according to embodiments of the present disclosure.

Fig. 6 is a block diagram of an indoor base station location calibration apparatus according to embodiments of the present disclosure.

## Detailed Description of the Embodiments

The embodiments of the present disclosure are described below in detail with reference to the drawings and the embodiments.

It is to be noted that terms "first", "second" and the like in the description, claims and the above mentioned drawings of the present disclosure are used for distinguishing similar objects rather than describing a specific sequence or a precedence order.

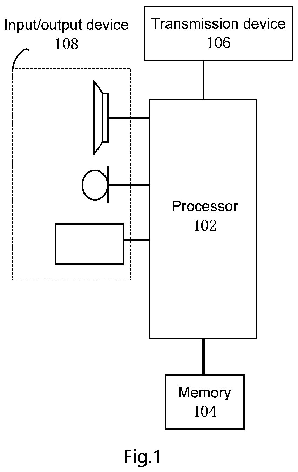

The method embodiments provided in the embodiments of the present disclosure may be executed in a mobile terminal, a computer terminal or a similar computing apparatus. By being operated on the mobile terminal as an example, Fig. 1 is a block diagram of a hardware structure of a mobile terminal of an indoor base station location calibration method according to embodiments of the present disclosure. As shown in Fig. 1, the mobile terminal may include one or more (only one is shown in Fig. 1) processors 102 (the processor 102 may include, but is not limited to, a processing apparatus such as a microprocessor MCU or a programmable logic device FPGA) and a memory 104 configured to store data. The above mobile terminal may further include a transmission device 106 configured to achieve a communication function, and an input/output device 108. Those skilled in the art may understand that the structure shown in Fig. 1 is only a schematic diagram, which does not limit the structure of the above mobile terminal. For example, the mobile terminal may also include more or less components than those shown in Fig. 1, or have a different configuration from that shown in Fig. 1.

The memory 104 may be configured to store a computer program, for example, a software program and a module of application software, such as a computer program corresponding to an indoor base station location calibration method in the embodiments of the present disclosure. The processor 102 runs the computer program stored in the memory 104, so as to execute various functional applications and service chain address pool sliding processing, that is, to implement the above method. The memory 104 may include a high-speed random access memory, and may further include a non-volatile memory, such as one or more magnetic disk memory apparatuses, a flash memory device, or other non-volatile solid-state memory devices. In some embodiments, the memory 104 may further include memories remotely disposed relative to the processor 102. The remote memories may be connected to the mobile terminal by using a network. Examples of the above network include, but are not limited to, the Internet, an intranet, a local area network, a mobile communication network, and a combination thereof.

The transmission apparatus 106 is configured to receive or transmit data via a network. The specific example of the above network may include a wireless network provided by a communication provider of the mobile terminal. In an example, the transmission apparatus 106 includes a Network Interface Controller (NIC), and may be connected to other network devices by using a base station, so as to communicate with the Internet. In an example, the transmission apparatus 106 is a Radio Frequency (RF) module, which is configured to communicate with the Internet in a wireless manner.

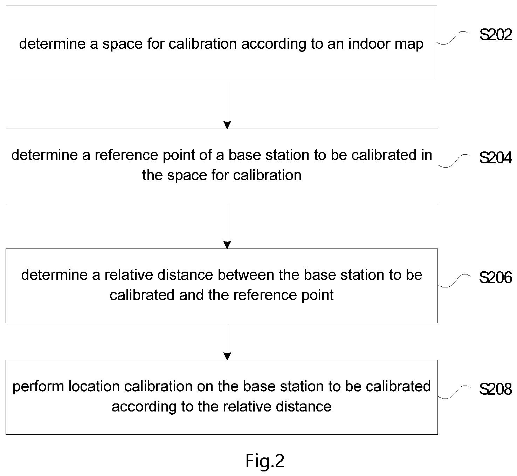

This embodiment provides an indoor base station location calibration method operating on the mobile terminal or network architecture. Fig. 2 is a flowchart of an indoor base station location calibration method according to embodiments of the present disclosure. As shown in Fig. 2, the flow includes the following steps.

At S202, a space for calibration is determined according to an indoor map.

In this embodiment, the indoor map may be drawn according to a CAD engineering drawing of a designed position, and by carrying a coordinate system, the indoor map may display a coordinate position of any point in real time.

In this embodiment, the space for calibration includes, but is not limited to, a line segment, a two-dimensional plane, and a three-dimensional space. S202 may specifically include: when the space for calibration is a line segment, determining a wall line with a shortest distance from the base station to be calibrated as the space for calibration according to the indoor map; and when the space for calibration is a two-dimensional plane or three-dimensional space, determining a wall space with a shortest distance from the base station to be calibrated as the space for calibration according to the indoor map. In addition to wall lines and wall spaces that may be used for calibration, others may also be used, such as pillars.

At S204, a reference point of a base station to be calibrated in the space for calibration is determined.

At S206, a relative distance between the base station to be calibrated and the reference point is determined.

In this embodiment, the relative distance of the base station to be calibrated relative to the reference point is measured; and measurement tools include, but are not limited to, relative distances measured by a laser range finder or other instruments, and inputting measurement results to the indoor map. S206 may specifically include: determining the relative distance between the base station to be calibrated and the reference point by a ranging device or a laser sensor. Further, the relative distance may also be inputted to the indoor map to subsequently determine a real location of the base station, thereby completing location calibration of the base station.

At S208, location calibration is performed on the base station to be calibrated according to the relative distance.

In this embodiment, S208 may specifically include: acquiring coordinates of the reference point; and determining coordinates of the base station to be calibrated according to the coordinates of the reference point and a relative location. The reference point and the ground space for calibration are labeled in the indoor map, and real coordinates of the base station to be calibrated are calculated and outputted by using a relative distance of a mechanism to be calibrated relative to the reference point.

Through S202 to S208, the space for calibration is determined based on the indoor map that may display a coordinate position of any point, the reference point of the base station to be calibrated in the space is determined, and location calibration is performed on the base station according to the relative distance between the base station to be calibrated and the reference point, such that the problems in the related art that base station coordinate calibration depends on professionals and professional devices, surveying and mapping efficiency is low, and surveying and mapping are complex may be solved. Location calibration can be efficiently and flexibly performed on a base station, so as to reduce the dependence on professionals and professional devices, and improve the efficiency of base station coordinate calibration. By effectively and flexibly changing the base stations to meet requirements, positioning efficiency is improved.

The reference point in this embodiment includes, but is not limited to, a vertical line point of the base station to be calibrated relative to a wall space, a vertical point relative to a wall line, a corner, a midpoint of the wall line, and the like.

In one embodiment, S204 may specifically include: when the space for calibration is the line segment, determining a vertical line point of the base station to be calibrated relative to the line segment as the reference point; or determining an end point of the line segment as the reference point; or determining a midpoint of the line segment as the reference point. The above manner is only a preferred manner of this embodiment, and does not constitute a limitation on the scope of protection of the embodiments of the present disclosure, and other manners of selecting the reference point are also available, for example, one point is randomly selected from a line segment as the reference point.

In another embodiment, S204 may specifically include: when the space for calibration is the two-dimensional plane, determining a vertical line point of the base station to be calibrated relative to each plane in the two-dimensional plane as the reference point; or determining an end point of an intersection line of the two-dimensional plane as the reference point; or determining a midpoint of the intersection line of the two-dimensional plane as the reference point. The above manner is only a preferred manner of this embodiment, and does not constitute a limitation on the scope of protection of the embodiments of the present disclosure, and other manners of selecting the reference point are also available, for example, one point is randomly selected from each plane in the two-dimensional plane as the reference point.

In another embodiment, S204 may specifically include: when the space for calibration is the three-dimensional space, determining a vertical line point of the base station to be calibrated relative to each plane in the three-dimensional plane as the reference point; determining an end point of each intersection line of the three-dimensional plane as the reference point; or determining a midpoint of each intersection line of the three-dimensional plane as the reference point; or determining an intersection point of the three-dimensional plane as the reference point. The above manner is only a preferred manner of this embodiment, and does not constitute a limitation on the scope of protection of the embodiments of the present disclosure, and other manners of selecting the reference point are also available, for example, one point is randomly selected from each plane in the three-dimensional plane as the reference point.

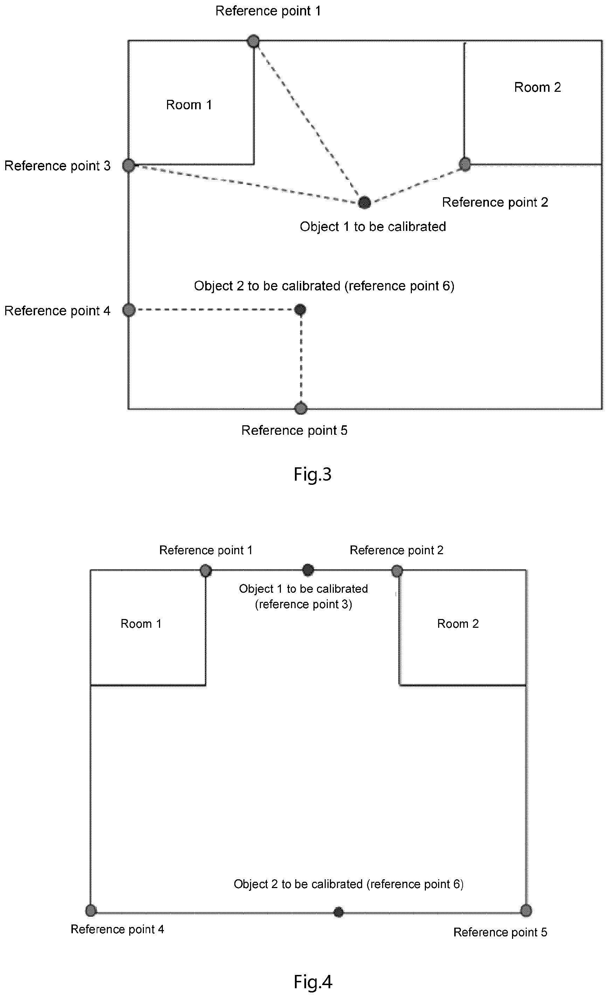

Fig. 3 is a schematic diagram of a location relationship between an object to be calibrated in a three-dimensional space and a reference point plane according to embodiments of the present disclosure. As shown in Fig. 3, a map region to be measured includes a room 1 and a room 2.

An object 1 to be calibrated and reference points of the space to be calibrated are determined, the reference points of the space to be calibrated of the object 1 to be measured and calibrated respectively are three corners, and the corresponding reference points in the space to be calibrated respectively are reference points 1, 2, and 3.

After the location of the object 1 of the base station to be calibrated is first determined, relative distances of the calibration base station object 1 relative to the reference points 1, 2, and 3 may be respectively measured by using measurement tools including, but not limited to, a laser range finder or other instruments, and specific units of measurement are harmonized according to mapping units, as shown by the dotted line connected to the object 1 to be calibrated in Fig. 1. Then measured distance lengths of three dotted lines are inputted to a map system drawn.

Finally, the map system converts the three measured relative distances to obtain final coordinate values of the object 1 to be calibrated in the drawn map.

Similarly, after the location of another object 2 to be calibrated is determined, the space for calibration is two wall spaces opposite to the object to be calibrated respectively, the corresponding reference points in the space for calibration respectively are reference points 4 and 5, and the ground or a ceiling vertical point overlapping with the calibration object is used as a reference point 6, such that from a plane figure, there are three reference points overlap with the calibration object.

Then, relative distances of the calibration base station object 2 relative to the reference points 4, 5, and 6 may be respectively measured by using the measurement tools including, but not limited to, the laser range finder or other instruments, and specific units of measurement are harmonized according to mapping units, as shown by the dotted line connected to the object 2 to be calibrated. The reference point 6 overlaps with the object to be calibrated. The measured distance lengths of three dotted lines are inputted to the map system drawn. Finally, the map system converts the three measured relative distances to obtain final coordinate values of the object 2 to be calibrated in the drawn map.

Fig. 4 is a schematic diagram of a location relationship between an object to be calibrated on a wall space of a two-dimensional space and a reference point plane according to embodiments of the present disclosure. As shown in Fig. 4, a map region to be measured includes a room 1 and a room 2.

The object to be calibrated and reference points of the space for calibration are determined. For an object 1 to be measured and calibrated, the space for calibration is corners (reference point 1 and reference point 2) of the room 1 and the room 2 respectively, and the ground or ceiling vertical point overlapping with the object to be measured is used as a reference point 3, such that from a plane figure, there are three reference points overlapping with the calibration object, and the corresponding reference points in the space for calibration respectively are the reference points 1, 2, and 3.

After the location of the object of the base station to be calibrated is first determined, relative distances of the calibration base station object 1 relative to the reference points 1, 2, and 3 may be respectively measured by using measurement tools including, but not limited to, a laser range finder or other instruments, and specific units of measurement are harmonized according to mapping units. Then the measured distance lengths of three dotted lines are inputted to a map system drawn.

Finally, the map system converts the three measured relative distances to obtain final coordinate values of the object to be calibrated in the drawn map. The object 2 to be calibrated in Fig. 4 repeats the above steps.

If the base station to be calibrated is located in a position, and distances of the base station to be calibrated from the other three reference points are measured, for example, the object 1 to be calibrated in Figs. 3 and 4. Coordinates of the reference point 1 are known to be (x1, y1, z1), coordinates of the reference point 2 are (x2, y2, z2), coordinates of the reference point 3 are (x3, y3, z3), coordinates of the base station to be calibrated are set to be (x, y, z), and the relative distances of the base station to be calibrated from the three reference points have been measured to be d1, d2, and d3, such that the following equations may be listed at one time.

$$d1 = \sqrt{(x - x1)^2 + (y - y1)^2 + (z - z1)^2};$$

$$d2 = \sqrt{(x - x2)^2 + (y - y2)^2 + (z - z2)^2};$$

and

$$d3 = \sqrt{(x - x3)^2 + (y - y3)^2 + (z - z3)^2};$$

The coordinates of the reference point are known, and the relative distances d1, d2, and d3 of the base station to be calibrated are measured, such that the coordinates (x, y, z) of the base station to be calibrated may be simultaneously calculated by combining three unknown numbers and the above three equations.

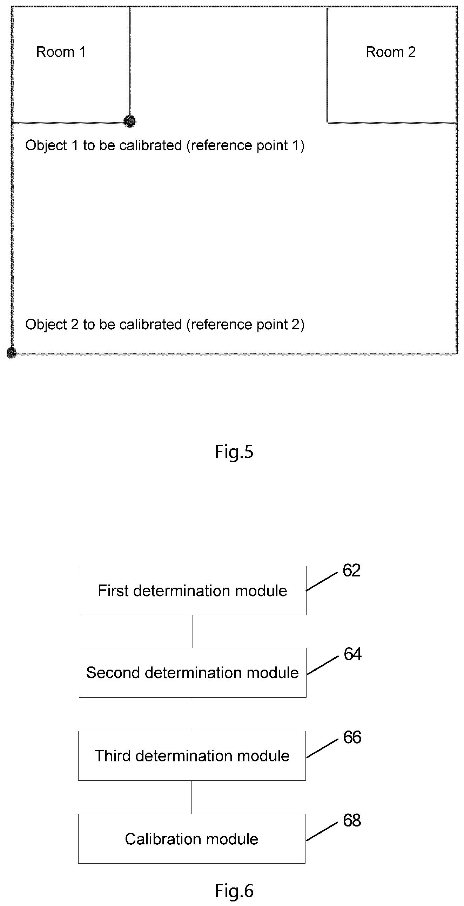

Fig. 5 is a schematic diagram of a location relationship between an object to be calibrated in a special space and a reference point plane according to embodiments of the present disclosure. As shown in Fig. 5, a map region to be measured includes a room 1 and a room 2.

The object to be calibrated and a reference point of the space for calibration are determined. Since the object 1 to be calibrated overlaps with a lower right corner of the room 1, the ground or ceiling vertical point corresponding to the object 1 to be calibrated only needs to be used as the reference point, such that only one reference point nees to be determined.

After the location of the object of the base station to be calibrated is first determined, the relative distance of the calibration base station object 1 relative to the reference point 1 may be respectively measured by using measurement tools including, but not limited to, a laser range finder or other instruments, and specific units of measurement are harmonized according to mapping units. Then the measured distance length is inputted to the map system drawn.

Finally, the map system converts the three measured relative distances to obtain final coordinate values of the object to be calibrated in the drawn map. The object 2 to be calibrated in Fig. 5 may repeat the above steps.

If the base station to be calibrated is located at the reference point of one corner, that is, the base station to be calibrated overlaps with the location of the reference point, coordinates of the corner reference point may be directly used as the coordinates of the base station, for example, the object 2 to be calibrated (reference point 2) in Fig. 5.

According to this embodiment, location calibration can be efficiently and flexibly performed on the base station to reduce the dependence on professionals and professional devices, so as to solve the problems of low surveying and mapping efficiency and inconvenient surveying and mapping for the coordinate calibration of the base station, thereby improving the efficiency of coordinate calibration of the base station; and by effectively and flexibly changing the base stations to meet requirements, positioning efficiency is improved.

Another aspect of the embodiments of the present disclosure further provides an indoor base station location calibration apparatus. Fig. 6 is a block diagram of an indoor base station location calibration apparatus according to embodiments of the present disclosure. As shown in Fig. 6, the apparatus includes a first determination module, a second determination module, a third determination module, and a calibration module.

The first determination module 62 is configured to determine a space for calibration according to an indoor map.

The second determination module 64 is configured to determine a reference point of a base station to be calibrated in the space for calibration.

The third determination module 66 is configured to determine a relative distance between the base station to be calibrated and the reference point.

The calibration module 68 is configured to perform location calibration on the base station to be calibrated according to the relative distance.

In one embodiment, the first determination module 62 is further configured to, when the space for calibration is a line segment, determine a wall line with a shortest distance from the base station to be calibrated as the space for calibration according to the indoor map; and when the space for calibration is a two-dimensional plane or three-dimensional space, determine a wall space with a shortest distance from the base station to be calibrated as the space for calibration according to the indoor map.

In one embodiment, the second determination module 64 is further configured to, when the space for calibration is the line segment, determine a vertical line point of the base station to be calibrated relative to the line segment as the reference point; or determine an end point of the line segment as the reference point; or determine a midpoint of the line segment as the reference point.

In one embodiment, the second determination module 64 is further configured to, when the space for calibration is the two-dimensional plane, determine a vertical line point of the base station to be calibrated relative to each plane in the two-dimensional plane as the reference point; or determine an end point of an intersection line of the two-dimensional plane as the reference point; or determine a midpoint of the intersection line of the two-dimensional plane as the reference point.

In one embodiment, the second determination module 64 is further configured to, when the space for calibration is the three-dimensional space, determine a vertical line point of the base station to be calibrated relative to each plane in the three-dimensional plane as the reference point; determine an end point of each intersection line of the three-dimensional plane as the reference point; or determine a midpoint of each intersection line of the three-dimensional plane as the reference point; or determine an intersection point of the three-dimensional plane as the reference point.

In one embodiment, the calibration module 68 is further configured to acquire coordinates of the reference point; and determine coordinates of the base station to be calibrated according to the coordinates of the reference point and a relative location.

In one embodiment, the third determination module 66 is further configured to determine the relative distance between the base station to be calibrated and the reference point by a range finder or a laser sensor.

In one embodiment, the apparatus further includes an input module.

The input module is configured to input the relative distance to the indoor map.

An embodiment of the present disclosure further provides a computer-readable storage medium. The computer-readable storage medium stores a computer program. Steps in any one of the above method embodiments are executed when the computer program is configured to operate.

In an exemplary embodiment, the computer-readable storage medium may include, but is not limited to, a USB flash disk, a Read-Only Memory (ROM), a Random Access Memory (RAM), and various media that can store computer programs, such as a mobile hard disk, a magnetic disk, or an optical disk.

An embodiment of the present disclosure further provides an electronic apparatus. The electronic apparatus includes a memory and a processor. The memory is configured to store a computer program. The processor is configured to run the computer program to execute steps in any one of method embodiments described above.

In an exemplary embodiment, the electronic apparatus may further include a transmission device and an input/output device. The transmission device is connected to the processor. The input/output device is connected to the processor.

For specific examples in this embodiment, refer to the examples described in the foregoing embodiments and the exemplary implementations, and this embodiment will not be repeated thereto.

It is apparent that those skilled in the art should understand that the above mentioned modules or steps of the present disclosure may be implemented by a general computing device, and may also be gathered together on a single computing device or distributed in network composed of multiple computing devices. The above mentioned modules or steps of the present application may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present disclosure are not limited to any specific combination of hardware and software.

The above are only the preferred embodiments of the present disclosure and are not intended to limit the present disclosure. For those skilled in the art, the present disclosure may have various modifications and variations. Any modifications, equivalent replacements, improvements and the like made within the principle of the disclosure shall fall within the scope of protection of the present disclosure.

**Claims**

1. An indoor base station location calibration method, comprising:

   determining a space for calibration according to an indoor map;
   determining a reference point of a base station to be calibrated in the space for calibration;
   determining a relative distance between the base station to be calibrated and the reference point; and
   performing location calibration on the base station to be calibrated according to the relative distance.

2. The method according to claim 1, wherein determining the space for calibration according to the indoor map comprises:

   when the space for calibration is a line segment, determining a wall line with a shortest distance from the base station to be calibrated as the space for calibration according to the indoor map; and
   when the space for calibration is a two-dimensional plane or three-dimensional space, determining a wall space with a shortest distance from the base station to be calibrated as the space for calibration according to the indoor map.

3. The method according to claim 2, wherein determining the reference point of the base station to be calibrated in the space for calibration comprises:

   when the space for calibration is the line segment, determining a vertical line point of the base station to be calibrated relative to the line segment as the reference point; or
   determining an end point of the line segment as the reference point; or
   determining a midpoint of the line segment as the reference point.

4. The method according to claim 2, wherein determining the reference point of the base station to be calibrated in the space for calibration comprises:

   when the space for calibration is the two-dimensional plane, determining a vertical line point of the base station to be calibrated relative to each plane in the two-dimensional plane as the reference point; or
   determining an end point of an intersection line of the two-dimensional plane as the reference point; or
   determining a midpoint of the intersection line of the two-dimensional plane as the reference point.

5. The method according to claim 2, wherein determining the reference point of the base station to be calibrated in the space for calibration comprises:

   when the space for calibration is the three-dimensional space, determining a vertical line point of the base station to be calibrated relative to each plane in the three-dimensional plane as the reference point;
   determining an end point of each intersection line of the three-dimensional plane as the reference point; or
   determining a midpoint of each intersection line of the three-dimensional plane as the reference point; or

determining an intersection point of the three-dimensional plane as the reference point.

6. The method according to claim 1, wherein performing location calibration on the base station to be calibrated according to the relative distance comprises:

acquiring coordinates of the reference point; and
determining coordinates of the base station to be calibrated according to the coordinates of the reference point and a relative location.

7. The method according to any one of claims 1 to 6, wherein determining the relative distance between the base station to be calibrated and the reference point comprises:
determining the relative distance between the base station to be calibrated and the reference point by a range finder or a laser sensor.

8. The method according to claim 7, further comprising:
inputting the relative distance to the indoor map.

9. An indoor base station location calibration apparatus, comprising:

a first determination module, configured to determine a space for calibration according to an indoor map;
a second determination module, configured to determine a reference point of a base station to be calibrated in the space for calibration;
a third determination module, configured to determine a relative distance between the base station to be calibrated and the reference point; and
a calibration module, configured to perform location calibration on the base station to be calibrated according to the relative distance.

10. A computer-readable storage medium, having a computer program stored therein, wherein the computer program is configured to, when being executed by a processor, cause the processor to implement the method according to any one of claims 1 to 8.

11. An electronic apparatus, comprising a memory and a processor, wherein the memory stores a computer program, and the processor is configured to execute the computer program to implement the method according to any one of claims 1 to 8.

Fig.1

determine a space for calibration according to an indoor map — S202

determine a reference point of a base station to be calibrated in the space for calibration — S204

determine a relative distance between the base station to be calibrated and the reference point — S206

perform location calibration on the base station to be calibrated according to the relative distance — S208

Fig.2

Reference point 1

Room 1

Room 2

Reference point 3

Reference point 2

Object 1 to be calibrated

Object 2 to be calibrated (reference point 6)

Reference point 4

Reference point 5

Fig.3

Reference point 1        Reference point 2

Object 1 to be calibrated
(reference point 3)

Room 1

Room 2

Object 2 to be calibrated (reference point 6)

Reference point 4

Reference point 5

Fig.4

Room 1

Room 2

Object 1 to be calibrated (reference point 1)

Object 2 to be calibrated (reference point 2)

Fig.5

First determination module — 62

Second determination module — 64

Third determination module — 66

Calibration module — 68

Fig.6

**INTERNATIONAL SEARCH REPORT**

| International application No. |
| --- |
| **PCT/CN2023/071746** |

**A. CLASSIFICATION OF SUBJECT MATTER**

H04W4/029(2018.01)i

According to International Patent Classification (IPC) or to both national classification and IPC

**B. FIELDS SEARCHED**

Minimum documentation searched (classification system followed by classification symbols)

IPC:H04B,H04W,H04L,H04Q,G01S

Documentation searched other than minimum documentation to the extent that such documents are included in the fields searched

Electronic data base consulted during the international search (name of data base and, where practicable, search terms used)

WPI, EPODOC, CNPAT, CNKI: 定位, 位置, 地图, 坐标, 参考点, 距离, 基站, position, location, map, coordinate, reference point, distance, base station

**C. DOCUMENTS CONSIDERED TO BE RELEVANT**

| Category* | Citation of document, with indication, where appropriate, of the relevant passages | Relevant to claim No. |
| --- | --- | --- |
| Y | US 2005186972 A1 (HITACHI, LTD.) 25 August 2005 (2005-08-25)<br>    description, paragraphs 0032-0048, and figures 5A and 5B | 1-11 |
| Y | CN 109782225 A (HANGZHOU MINIFIREFLY TECHNOLOGY CO., LTD.) 21 May 2019 (2019-05-21)<br>    description, paragraphs 0023-0051 | 1-11 |
| A | CN 109696653 A (UBTECH ROBOTICS CORP.) 30 April 2019 (2019-04-30)<br>    entire document | 1-11 |
| A | CN 110779516 A (XIAMEN KINGTOP INFORMATION TECHNOLOGY CO., LTD.) 11 February 2020 (2020-02-11)<br>    entire document | 1-11 |

☐ Further documents are listed in the continuation of Box C.  ☑ See patent family annex.

| * Special categories of cited documents: |
| --- |
| "A" document defining the general state of the art which is not considered to be of particular relevance |
| "D" document cited by the applicant in the international application |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

| "T" later document published after the international filing date or priority date and not in conflict with the application but cited to understand the principle or theory underlying the invention |
| --- |
| "X" document of particular relevance; the claimed invention cannot be considered novel or cannot be considered to involve an inventive step when the document is taken alone |
| "Y" document of particular relevance; the claimed invention cannot be considered to involve an inventive step when the document is combined with one or more other such documents, such combination being obvious to a person skilled in the art |
| "&" document member of the same patent family |

| Date of the actual completion of the international search | Date of mailing of the international search report |
| --- | --- |
| **10 March 2023** | **15 March 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| US | 2005186972 | A1 | 25 August 2005 | JP | 2005184296 | A | 07 July 2005 |
| | | | | CN | 1629653 | A | 22 June 2005 |
| CN | 109782225 | A | 21 May 2019 | None | | | |
| CN | 109696653 | A | 30 April 2019 | None | | | |
| CN | 110779516 | A | 11 February 2020 | None | | | |

International application No.

**PCT/CN2023/071746**

Form PCT/ISA/210 (patent family annex) (July 2022)

**REFERENCES CITED IN THE DESCRIPTION**

**Patent documents cited in the description**

- CN 202210499801